# EUROPEAN PATENT APPLICATION

(11) **EP 4 660 756 A1**
(43) Date of publication of application: **10.12.2025**
(21) Application number: 25180825.9
(22) Date of filing: 04.06.2025
(51) Int. Cl.: G06F 3/01, G06F 3/0481, G06F 3/04812, G06F 3/048

(54) **OUT-OF-PROCESS POINTER STYLES AND RESIZING EFFECTS FOR ELECTRONIC DEVICES**

(30) Priority: 09.06.2024 US 202463657956 P; 14.03.2025 US 202519080196
(71) Applicant: Apple Inc., Cupertino, CA 95014 (US)
(72) Inventor: EBBOLE, Mark A., Cupertino, 95014 (US); LAWRENCE, Jack H., Cupertino, 95014 (US)
(74) Representative: Bateman, Samuel Alec

(57) **Abstract**

Out-of-process hit-testing can provide privacy in computer user input systems. In an aspect, an application specifies a pointer style for a pointer element according to a location of the pointer element in relation to bounded regions of a UI window. In another aspect, an application specifies a resize effect for a UI element which when triggered by out-of-process hit testing, causes a UI element to change from a first state to a second state.

## Description

### TECHNICAL FIELD

This disclosure relates to human-computer interface technologies and computer privacy including, for example, to out-of-process pointer styles and resizing effects for electronic devices.

### BACKGROUND

Operating system software generally provides an abstraction layer between user interface hardware and applications that run on top of the operating system. Multiple applications with corresponding user interface windows can be presented on a display managed by an operating system.

### BRIEF DESCRIPTION OF THE DRAWINGS

Certain features of the subject technology are set forth in the appended claims. However, for purpose of explanation, several implementations of the subject technology are set forth in the following figures.
FIG. 1 illustrates an example environment for practicing aspects of this disclosure.
FIG. 2 illustrates an example system for providing out-of-process hit-testing, in accordance with aspects of the subject disclosure.
FIGS. 3A and 3B illustrate example methods for providing out-of-process UI services, in accordance with aspects of the subject disclosure.
FIG. 4 illustrates an example use case in which a pointer element has a pointer style applied out-of-process.
FIGS. 5A and 5B illustrate an example use case in which a UI element transitions from a first state to a second state, in accordance with aspects of the subject disclosure.
FIG. 6 illustrates a flow diagram of illustrative operations that may be performed for providing out-of-process hit-testing, in accordance with aspects of the subject disclosure.
FIG. 7 illustrates a flow diagram of illustrative operations that may be performed for providing out-of-process hit-testing, in accordance with aspects of the subject disclosure.
FIG. 8A illustrates an example computing device on which aspects of this disclosure may implemented. FIGS. 8B and 8C illustrate flow diagrams for an application process implementing aspects of the disclosure, in accordance with some implementations. FIGS. 8D and 8E illustrate a device diagram and a system diagram, each of which implement aspects of the disclosure, in accordance with some implementations. FIGS. 8F and 8G illustrate a flow for an API calling module and API interface, which may be used in accordance with some implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

Aspects of this disclosure include techniques for providing increased privacy and/or efficiency in computer user input systems. While any computer input system may benefit from these techniques, systems that are capable of capturing personally identifiable user data, such as extended reality systems that track a user's hand gestures and/or eye gaze location, may particularly benefit from these techniques.

In an aspect of this disclosure, a user input and rendering system may receive and render user input, and may filter the user input available to a computer software application (or "app" herein). User input filtering enables a user's privacy from the application at least by restricting the application's access to the user's filtered input data. In some aspects, a computer user input and rendering system may be more trusted than an application running on the same computer because, for example the user input and rendering system is provided by a trusted operating system vendor, while the application is provided by a less trusted third-party application vendor. Moreover, a user may explicitly provide an authorization to the operating system to access user input information and may not provide the same authorization to an application, such as a third-party application.

In an aspect, a user may receive rendered feedback of the user's preliminary interactions with a user interface element, such as a button or scroll bar, without making the preliminary interactions available to the application itself. Preliminary interactions with a UI element may include a user's intentional initial interactions with a user interface, such as exploration of the application's interface (for example to discover that a rectangle with a square inside is actually a scroll bar), and preliminary interactions may also include unintentional and even unconscious interactions with UI elements of the application (e.g., as the user's eyes move across a user interface without the user attending to the user interface).

Aspects of this disclosure provide techniques for efficiently retaining privacy of a user's preliminary UI interactions from an application while still providing rendered feedback of the preliminary interactions to the user. Rendered feedback of a preliminary interaction with a UI element might include, for example, a pointer style change when a user positions the pointer over different portions of an app interface such as over various UI elements of the app interface. In another example, rendered feedback of a preliminary interaction with a UI element might include hover effects over a UI element that cause the shape of the UI element to transform from an initial state to a secondary state when a user's gaze location or pointer is near or hovers near the UI element.

In an aspect, when it is determined that a user intends to interact with an application (or a UI element of the application), then the user input may be considered no longer to be preliminary, and some user input may be provided to the application. The user input, for example, may include coordinates corresponding to the gaze location or pointer location and an element identifier (id) corresponding to the UI element. In an aspect, an application may provide a declaration or definition of a rendered feedback effect of preliminary interactions with a UI element before preliminary interactions occur, giving the application control over the nature of the preliminary interaction feedback effect, even when the application never learns of a preliminary interaction with its UI elements. The application may provide a declaration or definition of the effect to an operating system or another software component for managing rendering of the preliminary interactions. When the rendering of the effect is managed in a separate operating system process from the application providing the declaration or definition of the effect, the effect is referred to herein as a remote effect or an "out-of-process effect". As described herein in connection with various examples and/or use cases, a separate operating system process from an application may provide, on behalf of the application, other out-of-process services, without providing information about the out-of-process services to the application (e.g., including out-of-process pointer style changes and out-of-process resizing effects, as described in further detail hereinafter).

As noted above, aspects of this disclosure may be applied to extended reality systems. A physical environment refers to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, user input may include tracking of a person's physical motions, and, in response the XR system may render an adjustment to one or more characteristics of one or more virtual objects simulated in the XR in a manner that comports with at least one law of physics. For example, if a user's hand gesture is rendered in an XR system at a location near but not touching a rendered application UI element, the UI element may be rendered with a glow, shake, or resize effect or a pointer style change may be rendered over the UI element or a combination thereof, or the like to otherwise indicate a preliminary interaction with that UI element without notifying the application of the preliminary user interaction. In an alternate example, if a user's hand gesture touches or grasps the UI element, it may be determined that the user deliberately intended to interact with the UI element, and then the user input indicating a touch or grasp of the UI element may be provided to the application. Further, in the case of a resize effect, the element id of the UI element may be provided to the application.

Many different types of electronic user input and rendering systems may enable a huma user to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head mountable system may have one or more speaker(s) and an integrated opaque display. Alternatively, a head mountable system may be configured to accept an external opaque display (e.g., a smartphone). The head mountable system may incorporate one or more imaging sensors to capture images or video of the physical environment, and/or one or more microphones to capture audio of the physical environment. Rather than an opaque display, a head mountable system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

Aspects of this disclosure provide rendered confirmation to a user of user engagement with an application user interface prior to providing user input to the application. The user input is protected from the application until the confirmation from the user is provided to engage with the application. A user interface (UI) may be displayed to appear at a location in a physical environment that is remote from a user input device and/or remote from the display device that displays the user interface (e.g., in a three-dimensional XR display environment). For example, physical movement of a mouse input device may be rendered as movement of a mouse cursor on a display at a different physical location (perhaps just a few inches) from the physical mouse. As another example, a gaze cursor may indicate the location of a user's gaze, the location of the user's gaze being remote from one or more eye-facing cameras that are used to determine the gaze location. As another example, a hand motion can be used in conjunction with the user's gaze to move the cursor in relation to an application interface and UI elements within the interface. Similarly, a hand gesture may be rendered as a hand object in a virtual space and presented to a user. Thus, a rendered effect of user input may be rendered or presented to a user at a location that is physically separated from the physical location of the sensor that obtained sensed user input. In a virtual space or other extended reality environment, the user input may also occur at a location that is remote from the display component that displays an application UI and/or a representation of the user's hand to appear to the user to be at a location remote from the display component.

Moreover, a user may move their hand and/or direct their gaze at or near a rendered application user interface without intending to interact with the application UI (e.g., due to normal motion of the user around the physical environment, such as during a conversation with another person unassociated with the electronic device), and/or may perform hand gestures for interaction with one displayed application UI that are not intended to be provided to an application associated with another displayed application UI.

Aspects of the disclosure include receiving, at a system process of an electronic device from an application running on the electronic device, a definition of one or more pointer styles for a pointer element for one or more pointer styles managed by the application. The pointer element can be understood as being a system-provided control element that the user can manipulate to move around the display to interact with various applications displayed at the display. The system can apply different styles to the pointer element depending on the location or usage of the pointer element. The different styles applied to the pointer element change the look of the pointer element and can provide different interaction experiences for the user. In aspects described herein, the system can apply different pointer styles to the pointer element which are defined and provided by the application, so that the system can apply the pointer styles without revealing to the application the location of the pointer element. The pointer style definitions include the pointer style or a source for the pointer style and corresponding boundary information relative to the application interface defining when that pointer style is to be applied. In a preliminary interaction, the system may determine that the user is directing a cursor, such as a mouse pointer, touch pointer, gaze pointer, or hand gesture input to interact with various portions of the application. As the cursor moves from one pre-defined bounded area to another, the pointer style can be rendered according to the pointer style definitions based on the location of the cursor in relation to the bounded areas. While the pointer element is displayed by the electronic device, the system process may receive an intentional user input, such as a pinch or click. Upon receiving the user input, the system process may provide the user input or an aspect of the user input, such as the location of the pointer, to the application.

Aspects of the disclosure include receiving, at a system process of an electronic device from an application running on the electronic device, a definition of a resizing effect for a first user interface (UI) element managed by the application. In a preliminary interaction, the system may determine that the user is directing a user input, such as a gaze input or cursor, such as a mouse pointer, touch pointer, gaze pointer, or hand gesture input over or near the first UI element. In response, the system may use the defined resizing effect to alter the rendered appearance of the first UI element from a first state to second state. While the first UI element is displayed by the electronic device in the second state, the system process may receive an intentional user input (e.g., a pinch, click, dwell time trigger, etc.) while the cursor is over the first UI element in the second state. In response to a determination that the user input corresponds to the first UI element in the second state, the location of the user input is provided to the application along with an indication that the first UI element is in the second state, such as the element id corresponding to the first UI element. For example, the preliminary interaction can cause the first UI element to change (e.g., expand) from a first state to a second state. The application is unaware of the preliminary interaction, and the corresponding change to the second state, so if the cursor is moved to a place that does not intersect the first UI element in the first state but does intersect the first UI element in the second state, the application would not understand that the user input was directed to the first UI element without also receiving as part of the user input an indication that the first UI element is in the second state. In an implementation, the indication can include that an element id of the first UI element that corresponds to the location of the user input. The application can use the element id to determine that the first UI element is in the second state, and the application can respond accordingly.

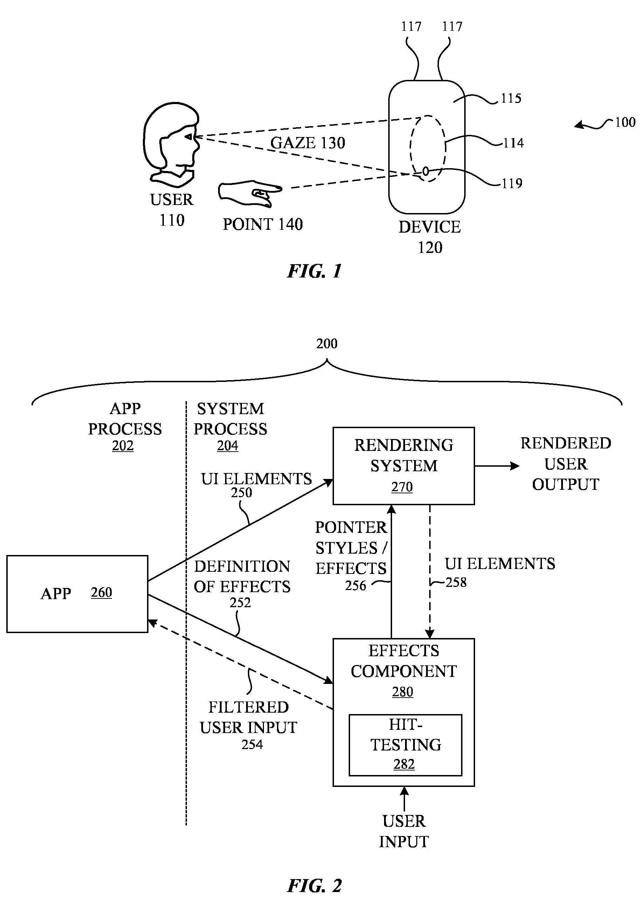

FIG. 1 illustrates an example environment 100 for practicing aspects of this disclosure. In example environment 100, a user 110 interacts with a computing device 120 having a display 115. As shown, the computing device 120 may include one or more speakers, such as speakers 117 (e.g., multiple speakers operable to generate spatialized audio that is perceived, by the user 110 to be emanating from a location, separate from the location of the speakers 117, in the physical environment of the user 110. In one or more examples described herein, user 110 may gaze (e.g., gaze 130) at computing device 120, and the device may sense a gaze location 114 of the user. In one or more examples described herein, user 110 may point (e.g., point 140) at computing device 120, and the device may sense a pointer location 119. In one or more implementations, the user's gaze location and/or point location my constitute a user input(s) to the device.

The computing device 120 may be a smart phone, a tablet device, or a wearable device such as a smart watch or a head mountable portable system, that includes a display system capable of presenting a visualization of an extended reality environment to the user 110. The computing device 120 may be powered with a battery and/or any other power supply incorporated into the computing device 120 and/or coupled to the computing device 120 (e.g., by a cable). In an example, the display system of the computing device 120 provides a stereoscopic presentation of the extended reality environment, enabling a three-dimensional visual display of a rendering of a particular scene, to the user. In one or more implementations, instead of, or in addition to, utilizing the computing device 120 to access an extended reality environment.

The computing device 120 may include one or more cameras (e.g., visible light cameras, infrared cameras, etc.) Further, the computing device 120 may include various sensors that can detect user input including, but not limited to, cameras, image sensors, touch sensors, microphones, inertial measurement units (IMU), heart rate sensors, temperature sensors, Lidar sensors, radar sensors, sonar sensors, GPS sensors, Wi-Fi sensors, near-field communications sensors, etc.) Moreover, the computing device 120 may include hardware elements that can receive user input such as hardware buttons or switches. User input detected by such sensors and/or hardware elements correspond to various input modalities for interacting with virtual content displayed within a given extended reality environment. For example, such input modalities may include, but not limited to, facial tracking, eye tracking (e.g., gaze direction), hand tracking (e.g., point direction), gesture tracking, biometric readings (e.g., heart rate, pulse, pupil dilation, breath, temperature, electroencephalogram, olfactory), recognizing speech or audio (e.g., particular hotwords), and activating buttons or switches, etc. The computing device 120 may also detect and/or classify physical objects in the physical environment of the computing device 120.

In one or more implementations, the computing device 120 may be communicatively coupled to a base device. Such a base device may, in general, include more computing resources and/or available power in comparison with the computing device 120. In an example, the computing device 120 may operate in various modes. For instance, the computing device 120 can operate in a standalone mode independent of any base device.

The computing device 120 may also operate in a wireless tethered mode (e.g., connected via a wireless connection with a base device), working in conjunction with a given base device. The computing device 120 may also work in a connected mode where the computing device 120 is physically connected to a base device (e.g., via a cable or some other physical connector) and may utilize power resources provided by the base device (e.g., where the base device is charging the computing device 120 and/or providing power to the computing device 120 while physically connected).

When the computing device 120 operates in the wireless tethered mode or the connected mode, a least a portion of processing user inputs and/or rendering the extended reality environment may be offloaded to the base device thereby reducing processing burdens on the computing device 120. For instance, in an implementation, the computing device 120 works in conjunction with a base device to generate an extended reality environment including physical and/or virtual objects that enables different forms of interaction (e.g., visual, auditory, and/or physical or tactile interaction) between the user and the extended reality environment in a real-time manner. In an example, the computing device 120 provides a rendering of a scene corresponding to the extended reality environment that can be perceived by the user and interacted with in a real-time manner. Additionally, as part of presenting the rendered scene, the computing device 120 may provide sound, and/or haptic or tactile feedback to the user. The content of a given rendered scene may be dependent on available processing capability, network availability and capacity, available battery power, and current system workload.

The computing device 120 may also detect events that have occurred within the scene of the extended reality environment. Examples of such events include detecting a presence of a living being such as a person or a pet, a particular person, entity, or object in the scene.

FIG. 2 illustrates an example system 200 for providing out-of-process effects. System 200 may be implemented, for example, on computing device 120. System 200 includes an application (app) process 202 corresponding to an application (app) 260, and a system process 204, including rendering system 270 (e.g., a rendering process) and an effects component 280 (e.g., an effects process). In some aspects, processes 202 and 204 may be separate processes run on a common device, such as computing device 120, or on separate devices. Aspects of the system process 204 (e.g., including the rendering system 270, the effects component 280, and/or hit-testing 282) may be implemented in hardware, software, or a combination thereof.

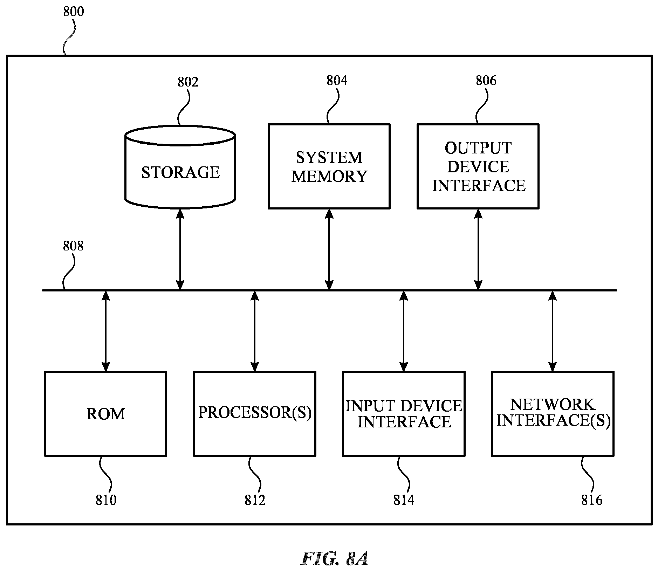

As depicted in FIG. 2, system process 204 includes both rendering system 270 and effects component 280. However, this disclosure is not so limited. For example, rendering system 270 may run in a separate process from the effects component 280, the rendering system 270 and the effects component 280 may be implemented in a common process, or the rendering system 270 and effects component 280 may be further distributed to run in more than two processes, all of which may be separate from app process 202. Similarly, in other aspects, app 260 may be distributed to run in more than one app process. Processes, such as app process 202 and system process 204, may provide security and/or privacy between the processes when running on a common device, such as computing device 120 of FIG. 1 or the computing device of FIG. 8A. For example, app process 202 and system process 204 may operate with different virtual memory spaces as controlled by an operating system and enforced by a processor's memory controller hardware. Separate app and system processes may help prevent app 260 from accessing data inside system process 204. In other aspects, system process 204, rendering system 270 and effects component 280 may include one or more operating system drivers that do not run in a virtual memory space.

Operation of system 200 may include receiving a user input, and outputting a rendered effect as feedback of the user input, and this may be performed outside of the app process 202 and without knowledge of app 260. The user input may correspond to gaze input, for example, and/or point input, and so forth. The rendered effect may include an effect applied to a UI element and/or a changing of an applied pointer style to a pointer element. App 260 may provide a description of its UI element(s) 250 and pointer style(s) to rendering system 270, and app 260 may provide a definition of its pointer style(s) and/or effects 256 to be rendered in response to future user input. When effects component 280 receives user input corresponding to a definition of effects received from app 260, effects component 280 may cause pointer style(s) and/or effects 256 to be rendered by rendering system 270 as output displayed to the user. When effects component 280 receives user input at a particular location while a UI window or UI element is displayed that has a pointer style defined by the app 260, the effects component 280 may apply a pointer style definition to the pointer element corresponding to the particular location (e.g., bounding area or UI element).

In optional aspects of system 200, effects component 280 may learn of a location of a UI element (e.g., a location of a button or scroll bar), for example directly from the app 260 or via an optional UI elements 258 message from rendering system 270. In one or more implementations, effects component 280 may then perform optional hit-testing 282 between a current location of a UI element and a current location of a user input. In one or more other implementations, hit-testing 282 may be performed by another system process that is separate from the effects component 280 and that performs hit-testing for multiple different purposes (e.g., for the effects component 280 and other components and/or processes). When a particular user input is identified as being associated with a particular UI element by hit-testing 282 (e.g., by the effects component 280 or another system process of the computing device 120) between a user input and a particular UI element of an app 260, hit-testing 282 may identify a preliminary interaction with the particular UI element of the app 260. When a preliminary interaction is identified, pointer style(s) and/or effects 256 may be rendered as user output without notifying app 260 of the user input or the identified interaction. Alternately, when an alternate user input is identified as a confirmed interaction by a user with a UI element, then effects component 280 or another system process may notify app 260 of the confirmed interaction as filtered user input message 254.

In reference to the preceding paragraph, rather than perform optional hit-testing 282 between a current location of a UI element and a current location of a user input, the optional hit-testing 282 may be performed between a set of boundary definitions of a UI window and the current location of the user input. When a particular user input is identified as being associated with a particular pre-defined bounded area of the UI window by hit-testing 282 (e.g., by the effects component 280 or another system process of the computing device 120) between a user input and the UI window of an app 260, hit-testing 282 may identify a preliminary interaction with the particular bounded area of the UI window of the app 260. When a preliminary interaction is identified, pointer style(s) and/or effects 256 may be rendered as user output without notifying app 260 of the user input or the identified interaction.

The definition of effects 252 may describe a variety of effects or pointer styles that an app instructs the system process 204 to render on one or more UI elements and/or on a pointer element. Each effect or pointer style defined in the definition of effects 252 may correspond to a certain type of user input interaction with a particular UI element and/or particular bounded region of a UI window. In aspects, the definition of effects 252 may describe a plurality of pointer styles to be rendered in response to one or more user input interactions with a UI element and/or a bounded region of a UI window. For example, definition of effects 252 may indicate that when a user's gaze is within a certain threshold distance of a particular region of a UI window or within a certain threshold distance of a UI element and a user's hand is pointing within a certain threshold distance of the particular region of the UI window or within a certain threshold distance of the UI element, the pointer style of the pointer element will change from one style to another The threshold distance may be for example, a certain number of pixels, a distance, or the like, and may include zero and may be negative (so that the threshold distance is inset within the UI element). In aspects, the definition of effects 252 may describe a plurality of effects to be rendered in response to a single user input interaction with a single UI element. For example, definition of effects 252 may indicate that when a user's gaze is within a certain range of a particular button UI element, the button will animate and transition from a first state to a second state, the second state, for example, being larger than the first state.

In an alternate optional aspects, app 260 may provide effects component 280 with information describing the UI element of the app 260 directly (e.g., instead of the effects component 280 receiving UI information from the rendering system 270). Additionally, instead of hit-testing based on location, hit-testing 282 may more generally determine that a certain user input corresponds to an interaction with a particular user interface element. For example, a user's verbal audio input saying "the red button" may cause the hit-testing 282 to associate that audio input with a red button UI element.

In an aspect, a definition of a pointer style and/or effect 252 may be a declarative definition. In this aspect, app 260 may provide all information necessary for a software component outside of app process 202, such as effects component 280, to cause the app's desired pointer style and/or effect to be rendered without the app's knowledge or further participation. For pointer styles, a declarative definition of a pointer style may include an identification of a UI element and/or boundary definitions for a location of a UI window (e.g., where the UI element and/or UI window is provided by a user interface framework or the operating system), an identification of a triggering user input, and an identification of a pointer style to be rendered when the triggering user input corresponds to the UI element and or boundary definition. The identification of the pointer style may correspond to a description of a pointer style (e.g., one or more parameters and/or variables defining one or more of size, shape, dimensions, color, etc.), an image of a pointer style, or a source location of a pointer style (e.g., a rendered output of the application which is redirected to become the pointer element).

For resize effects, a declarative definition of an effect may include an identification of a UI element, state information for a default or first state of the UI element, state information for a second state or triggered state of the UI element, transition or animation information for transitioning from the first state to the second state, an identification of a triggering user input, where the effect to be rendered when the triggering user input corresponds to the first UI element corresponds to transitioning the UI element from the first state to the second state. In one or more implementations, the second state of the UI element may include multiple additional UI elements, each enabled for further out-of-process hit testing according to the processes described herein. In one or more implementations, the UI element and/or defined bounded areas may be vended from one or more files, such as a Universal Scene Description (USDZ) file. In another implementation, the UI element and/or bounded area referenced in the app's declarative definition may be provided by the operating system. In one or more implementations, the declarative definition for a resize effect may include state information for any number of states, such as for X states larger than the current state and/or Y states smaller than the current state.

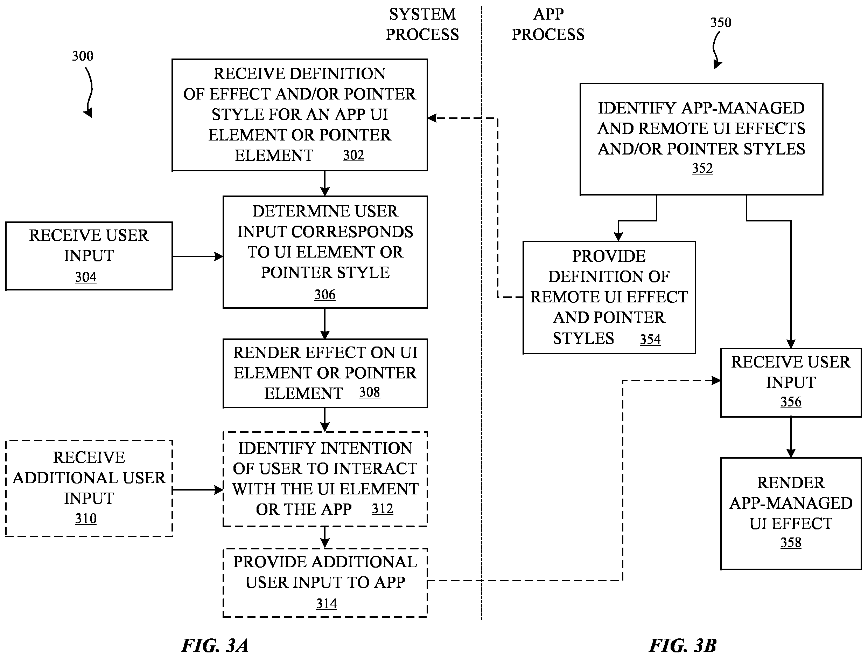

FIG. 3A illustrates an example method for rendering UI effects. As shown, the method of FIG. 3A may include receiving, at a system process 300 (e.g., an implementation of the system process 204 of FIG. 2), a definition of an effect for a UI element of an app (box 302). One or more definitions of one or more pointer styles may also be received at box 302. User input may be received (box 304) by the system process 300, and when it is determined (e.g., by the system process 300, such as by performing hit-testing 282) that the received user input corresponds to the UI element of the received effect definition or pointer style definition and/or to the bounded location within the UI window for the received pointer style definition (box 306), then the effect and/or pointer style may be rendered (e.g., by the system process 300) on the UI element or pointer element (box 308) according to the effect definition and/or pointer definition. In an aspect, the operations of FIG. 3A may be performed in a system process 300, separate from an app process 350 (e.g., an implementation of the app process 204) in which the app runs.

The method of FIG. 3A may include optional additional operations, such as receiving, by the system process 300, additional user input (box 310), different from the user input received in box 304. When a user's intention to interact with the app or a UI element of the app is identified (box 312) by the system process 300 (e.g., by performing hit-testing 282), based on the original user input and/or the additional user input, some or all of the user input with which the user intention was identified may be optionally provided from the system process 300 to (or otherwise made available to) the app process 350 (box 314). In one or more use cases, the user input maybe provided to the app process 350 in connection with the UI element of the app for which the user's intention to interact with the app or a UI element of the app is identified. In one or more other use cases, a foreground UI window or foreground UI element may be displayed for which a foreground control style definition was provided to the system process 300 (e.g., at box 302), and some or all of the user input with which the user intention was identified may be provided from the system process 300 to (or otherwise made available to) the app process 350 (box 314) in connection with the foreground UI window or the foreground UI element (e.g., even if the user input was identified as being intended for interaction with another UI element or UI window).

The UI element referenced throughout FIGS. 3A and 3B may be part of an app's user interface. For example, the UI element may be defined by the app, and a purpose of the UI element may be to enable a user to interact with the app (after the user's intention to interact with the app is identified). In an aspect, a UI element may include one or more properties, such a location, a size, an orientation, a color, a transparency, or a brightness (as examples) of the UI element, a control style. In one or more implementations, an effect definition may include a modification of one or more properties, such as the location, the size, the orientation, the color, the transparency, or the brightness (as examples) of the UI element. For example, an effect definition for a button UI element may include a lift effect to raise a location property of the button and a brightening effect to increase a brightness property of the button. In another example, an effect definition for a button UI element may include a resize effect to change the button UI element from a smaller size to a larger size and may include an animation definition to effectuate the transition. Furthermore, an app UI element may include predefined "remote states," where a remote state corresponds to predefined value(s) of the UI element's properties. A remote state of an app's UI element may be considered remote in that, while the app may define the UI element, its properties, and its remote states, only system components in a separate system process (such as rendering system 270 and/or effects component 280) may manage or have knowledge of the UI element's remote state. This may allow a user's preliminary interactions with the UI element to be rendered while remaining private from the app by preventing the app from discovering which remote state the UI element is in at any particular time. For example, for the resize definitions, the remote state can include the initial state information for the UI element and one or more second or triggered state information for the UI element and the system can effectuate the change from the first state to the second state based on the user's preliminary interactions without providing input to the application.

The pointer element referenced throughout FIGS. 3A and 3B may be part of an app's user interface when the app provides customization options to the system for applying pointer styles to the pointer element. For example, the pointer styles for the pointer element may be defined by the app, and a purpose of the pointer styles may be to enable a user to perform preliminary interactions with the app using a pointer style that is contextually relevant to the app while still protecting the user input. After the user's intention to interact with the app is identified, the customized pointer style can more effectively allow the user input to the app be used as intended. For example, a default pointer style may not properly represent an operation to be performed, while a customized pointer style may provide more useful preliminary interactions with the UI elements of the app interface. In an aspect, pointer style may include one or more properties or source definitions, such a size, an orientation, a color, a transparency, a shape, dimensions, a brightness, an image, an icon, or a redirected application supplied style (as examples). In one or more implementations, a pointer style definition may include a modification of one or more properties of another pointer style. For example, a paint app may provide different brushes and erasers. A pointer style may define a brush pointer style when a brush tool is selected and an eraser pointer style when an eraser tool is selected. However, when the user input moves the pointer element to a portion which is no longer over a canvas of the paint app then the pointer style may change to another pointer style so the user is not confused about why a paint brush styled pointer would be over a portion of the paint app which is not a canvas. Further, if the pointer element is directed to become outside the UI window provided by the application (e.g., outside the boundaries of the app) and into a system supplied portion of a display, the pointer style returns to a default pointer style or a system supplied pointer style. The movement of the pointer element can be a preliminary interaction so that none of the user input is provided to the app (until the user, for example, pinches or clicks to indicate that the user input should be sent). The user input in this case can include gaze input (e.g., gaze 130) and hand input (e.g., point 140), where the gaze input indicates the application desired for interaction and the hand input controls the pointer element. Furthermore, an app pointer style may include predefined "remote states," where a remote state corresponds to predefined value(s) of the pointer style properties. A remote state of an app's pointer styles may be considered remote in that, while the app may define the pointer styles, its properties, and its remote states, only system components in a separate system process (such as rendering system 270 and effects component 280) may manage or have knowledge of the pointer style's remote state. This may allow a user's preliminary interactions with the UI via a pointer element to be rendered with a corresponding pointer style while remaining private from the app by preventing the app from discovering which remote state the pointer element is in at any particular time.

In an aspect, the UI elements and/or pointer styles referenced throughout FIG. 3A and 3B may also be obtained directly from the app or from alternate sources, such as the UI frameworks and file formats described above or from the operating system. These UI elements provided by alternate sources may act as a portion of an app's user interface (such the user interface of app 260 of FIG. 2). UI elements and/or pointer styles from alternate sources may have associated properties and "remote states" defined by the alternate source and/or defined by the app using it. For example, even though a UI element and/or pointer style may originate from an alternate source, such a UI element and/or pointer style may still be managed by the app using it to cause a system process to render remote effects while retaining privacy from the managing app.

In an aspect, UI elements and/or pointer styles may be specified as part or all of a layer tree or a render tree. For example, application 260 may provide a layer tree or render tree for the UI (including, e.g., pointer styles) and for the UI elements to rendering system 270, and application 260 may provide a definition of effects 252 including a layer tree or render tree of UI elements to an operating system or other component managing out-of-process UI effects.

The effect and/or pointer style definition (box 302) may be received from a particular app running in an app process 350, and may describe an effect (such as a resize effect) to be rendered on a UI element belonging to that particular app, and/or may describe a pointer style to be rendered at a pointer element when the pointer element is located in certain specified regions or over certain specified UI elements. However, implementations of this disclosure are not so limited. For example, the effect and/or pointer styles definition received in box 302 may be received indirectly from other sources, the effect and/or pointer styles definition may be a predetermined effect, or UI element may be a predetermined UI element. In one example, a button UI element may be predefined, and a "lift" effect may be predefined to occur when a gaze or hover user input is determined to correspond to the predefined button effect. In another example, a UI element may have a first state and a second state to transition to when a gaze or hover user input is determined to correspond to the predefined UI element. In the case of predefined effects and/or predefined UI elements, the received effect definition may include a reference to the predefined elements without fully defining such element.

In an aspect, an effect definition may identify an effect to be rendered for a UI element by identifying a remote state (with predefined rendering property values) to be used when user input is determined to correspond to the UI element. In a further aspect, the effect definition may identify an animation to be used when transitioning between predefined remote states.

User input (such as is received in boxes 304 or 310 of FIG. 3) may include one or more different types of input from a user. For example, in addition to user inputs received from user input devices such as a mouse, a keyboard, and/or an audio input device, received user input may also include location and/or orientation tracking of a user's body or body part (such as a fingertip or hand), gesture recognition (such a hand shape, hand motion, and/or a facial expression), or a location of a user's optical gaze (e.g., a gaze location 114). User input may include time or speed measurements, such as a gaze-dwell duration measuring a time duration that a user's gaze remains on or within a certain distance of a particular location or UI element, or hover-dwell measuring a time duration that a user hand or other body part remains within a certain two-dimensional or three-dimensional distance of a particular location or UI element.

In an aspect, UI effects (such as is defined in box 302 and rendered in box 308 of FIG. 3) may include any rendered output a user can sense, including audio, imagery, and/or tactile effects. An example of an audio effect on a UI element may include an audible sound designed to be perceived as emanating from the location of UI element, or a distortion of audio already emanating from the UI element before rendering of the audio effect. As an example of an imagery effect, a UI element may be displayed or otherwise visually presented to a user prior to rendering of the effect, and the rendered effect may change the appearance or location of UI element. For example, a glow effect may cause an existing UI element to glow. For example, UI effects may also include a resize effect which changes an apparent size of a UI element from a first state to a second state, where the second state may include additional UI elements. A highlight effect may add a new visual cue, such as a circle or check mark, near the location of the UI element. In an aspect, an effect definition may specify an "inverse" rendering effect, in which the specified effect is generally rendered except when a user input corresponds to the UI element.

In an aspect, identifying a correspondence between a user input and a first UI element or pointer style (box 306) may include identifying a plurality of user interface elements that the first UI element may intersect with, and then determining that the plurality of identified UI elements includes the first UI element; or may include identifying a pre-defined bounded area of the user interface. For example, user input may be a gaze location. The system process may perform a hit-testing process (e.g., hit-testing 282) including identifying a list of potential UI elements and/or bounded areas that the user may be attempting to interact with, such as by identifying all UI elements and/or bounded areas from all applications that are located within a threshold distance of the gaze location and/or identifying all UI elements with which gaze direction intersects. Similarly, for example, user input may be a hand pointer gesture or positioning of the finger in a pointer position. If an effect or pointer style definition includes an app UI element that is in that list, then the corresponding effect may be rendered on that app UI element and/or the pointer element may be altered to correspond to a pointer style corresponding to that app UI element. If a pointer style definition includes a bounded location for an app UI that is in that list, then the corresponding pointer style may be rendered on the pointer element. In a use case in which the gaze location or hand pointer location intersects with multiple UI elements each having effect definitions, the system process may render the effect or select the pointer style for the UI element, among the multiple UI elements, that is displayed to appear closest to the user among the multiple UI elements and/or on the UI element, among the multiple UI elements, with which the gaze location or hand pointer location most centrally intersects.

In an aspect, a single effect may be defined for a group of UI elements. For example, when user input correspondence is determined (306) for any of the UI elements in the group, the defined effect may be rendered on all UI elements in the group. For example, if the defined effect is a resize effect, each respective UI element in the group may have a defined second state applied during the application of the resize effect. In another example, user input correspondence in box 306 may be determined by only a subset of the UI elements in the group. The definition of an effect for a group of UI elements may include an indication of a which subset of UI elements in the group to hit-test against. If a user input location (such as a location of a user's gaze or hand gesture) is within a certain proximity (e.g., a predefined distance defined by the system process or in the effects definition) of any element in the indicated subset of UI elements, the effect may be rendered on all UI elements in the group (e.g., unless a foreground UI window or foreground UI element having a foreground control style has been defined and displayed). In another example, if the UI element is in a second state because a resize effect is being applied, the second state of the UI element may contain one or more UI sub-elements, in which user input can be determined to correspond to one of these one or more UI sub-elements to provide a further effect and/or a pointer style change, according to the definitions.

In an aspect, a single effect definition may define a group of rendered effects. When correspondence to the UI element is determined (box 306), the UI element may be rendered with multiple different effects (box 308). For example, an effect definition for a button may include a combination of a lift effect (e.g., a movement of the button in a direction opposite pressing the button), a glow effect (e.g., brighten), an audio cue (e.g., an audio tone emanating from the button), and a resize effect.

In an aspect, an effect definition may combine multiple aspects described above. For example, a single effect definition may include multiple UI elements, multiple effects to render, and/or multiple types of user input that may trigger the rendering of the one or more effects. Further, effects definitions may be combined with pointer style definitions.

In an aspect, only a summary or a subset of user input may be provided to the app (box 314), even after identifying a user's intention to interact with the app (box 312). For example, once a user's gaze-dwell time on an app button is greater than a threshold, the intention to interact with the app may be identified. However, instead of providing the user's gaze location or gaze dwell time to the app, the app may be provided with an indication that the user intended to press the app button without providing the app any knowledge about the user's gaze.

In an aspect, a remote effect definition may specify an animation for rendering when transitioning between remote states. For example, when the effect is a resize effect, a remote state transition animation may be defined for transitioning from the first state of the UI element to the second state of the UI element. In addition, the second state of the UI element can include a continuous animation of the UI element in some aspects. In the case that the second state of the UI element includes UI sub-elements and is animated, then a user input sent to the application upon an interaction determination (box 312) can include a current location of the UI element with respect to a global coordinate system or with respect to the app interface as well as a location the user input with respect to the app interface.

In an aspect, additional user input can be received (box 310). The additional user input can include a physical indication from the user that the user intends to interact with the application. For example, the user may make a pinch gesture, a swiping gesture, a flicking gesture, and so forth, with their hands. Other gestures may be made with a leg, arm, or head. Gestures may include dual hand gestures. The additional user input may also or instead be a mouse click, a vocal signal, a tap, and so forth. The additional user input may be received by the system process and the system process may use the additional user input to identify (box 312) an intention of the user to interact with the UI element or the app. When the system identifies that the user intends to interact with the UI element or the app, then user input can be provided to the app (box 314). The user input that is provided may be an abstraction of the user's input. For example, rather than provide eye gaze input to the app, the location of the input without source-type information may be provided to the app.

In an aspect, for example, when the effect definition is for a resize effect, the preliminary interaction may trigger the resize effect of a first UI element to change from its first state to a second state. The second state may be larger in size than the first state. The app is not aware of what state the first UI element is in. Thus, when the user input is sent to the app, the location corresponding to the user input may be directed to the first UI element in the second state, but were the app only to receive the user input location data, the app could presume that the first UI element was in the first state and so the input may cause an unintended result. Whereas when the user desired to interact with the first UI element in the second state, because the second state was not available to the app, then the app will direct the input to another UI element perhaps or to perhaps a feature of the app which is not interactive. Aspects of the subject technology send, along with the location information, an id of the UI element which is in the second state which corresponds to the user input location data. The app can receive this id information and determine that because the user input location data corresponds to a location which does not align to the first state of the first UI element, then the first UI element must be in the second state and may thus respond accordingly.

In an aspect, the pointer style may correspond to a pointer style that is sized or patterned to affect a larger area of the app interface. For example, in a paint app, a brush styled pointer could have different sizes such that their use affects a larger area of the application interface. A pattern styled pointer could correspond to a zebra pattern or some other pattern that affects multiple areas of the app interface. When the user input is provided to the app (box 314), the user input can include a location of the pointer element at the time that the additional user input was provided In such instances, the additional user input can include the user input location data. The app knows its own state, so when the user input location data is received, the app can determine which pointer style was applied at the time the additional user input was provided and alter the app interface according to the pointer style and the user input location data.

In one or more aspects, the system can apply a pointer style to a pointer element interacting with a virtual object. The virtual object may be generated by the app in place of a physical object in the environment based on visual sensor input of the physical environment. In some implementations, after generating the virtual object, the virtual object can be made invisible so that the physical object appears to be in view of the user. The user can interact with the virtual object, which now appears to be the physical object, thereby allowing a pointer style to be applied to an interaction with what seems to be a physical object. Further, an effect may be applied in a similar manner, for example, after generating the virtual object, for example, the effect can, for example, apply a surface texture, label, logo, or color effect to the virtual object (now invisible) without providing user input data to the system related to the preliminary user interaction of the virtual object.

FIG. 3B illustrates an example method for rendering UI effects, in accordance with aspects of the subject disclosure. As shown, the method of FIG. 3B may include identifying, by an app process 350, app-managed rendering effect(s) and/or pointer styles and remote rendering effect(s) and/or pointer styles (box 352) for corresponding UI elements and/or pointer element. A definition of the identified remote rendering effect(s) may be provided, by the app process 350 (box 354), to a remote effect rendering service provider (such as rendering system 270 and/or effects component 280 of FIG. 2). User input may be received (box 356), by the app process 350, for a UI element with a corresponding app-managed effect. The app-managed UI effect may be rendered (box 358) by the app process 350 on its corresponding UI element. In one or more implementations, the app-managed UI effect, and/or one or more application functions performable by the app in response to user inputs, may be performed by the app process 350 based on which portions of an application's UI (e.g., which UI element) was interacted with by the user input. In one or more implementations, when a foreground control style is defined by the app process 350 and provided (354) to the system process 300, the user input received at box 356 may be received in connection with a different UI window or UI element (e.g., a foreground UI window having the foreground control style defined) from the UI window or UI element at which the system process 300 detected the user input.

In an aspect, the operations of method of FIG. 3B may be performed in an app process 350, separate from a system process 300 in which the remote/out-of-process UI effects and pointer styles are managed. In another aspect, the method of FIG. 3A may be an example method for providing a remote effect and pointer styles rendering service, and the effect definition and pointer style definitions provided in box 354 may be received at box 302. In yet another aspect, the additional user input provided in box 314 may be received at box 356. In one or more implementations, the pointer style definition provided in box 354 and received at box 302 may include a rendered pointer provided by the app and redirected by the method of FIG. 3A to be composited at the location of the pointer element.

In other aspects, effects for preliminary user interactions may be identified as remote-UI effects, while effects for confirmed user inputs may be identified as app-managed UI effects and/or pointer styles (box 352). In one or more implementations, app-managed UI effects and/or pointer styles based on confirmed user inputs may be managed, by the application, based on the location of the user input (e.g., as provided in box 314) and optionally an element id corresponding to the UI element which has an effect applied. For example, if the effect applied to a first UI element is a resizing effect, the user input may be provided at a location which does not correspond to the first UI element in the first state, but only the second state. The app process 350 does not know that the first UI element effect was applied and so the operation at box 314 may include an element id for the first UI element so that the app receives an indication that the first UI element is in the second state. Then the app process 350 can determine what portion of the first UI element in the second state received the user input based on the user input location and the known information about the second state of the first UI element. In one or more implementations described in further detail hereinafter, the system process 300 may redirect a rendered pointer style from the application and apply it to the pointer element.

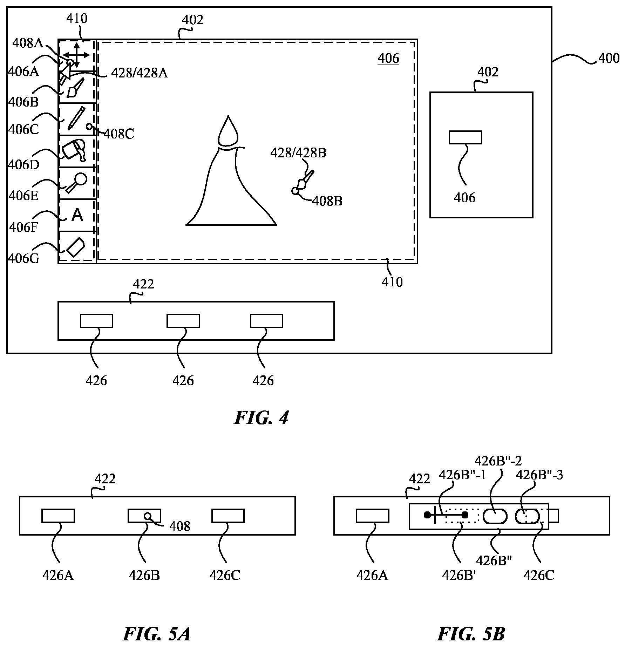

FIG. 4 illustrates an example use case in which one or more UI windows 402 of an application, such as application 260, are displayed in a viewable display area 400 of the computing device 120 (e.g., a viewable area of the display 115 of the computing device 120). For example, the display 115 (see, e.g., FIG. 1) of the computing device 120 may be operable to display, in a viewable display area 400 of the display 115, one or more user interface windows 402 corresponding to an underlying application (e.g., app 260) running at the computing device 120. As shown, the computing device 120 may also display a UI window 422 of another underlying application running at the computing device 120.

As shown, the user interface windows 402 of the application 260 may include one or more user interface elements 406. As shown, the user interface window 422 may also include one or more UI elements 426. As examples, the user interface elements 406 and/or the UI 426 may include virtual buttons, virtual switches, virtual lists (e.g., drop-down lists), tabs, scrollbars, application icons, and/or other interactable elements. As shown in FIG. 4, by way of explanation only and not as a limitation, some of the user interface elements 406 correspond to various tools of a paint application which can be selected for use in the application 260, such as a move tool 406A, brush tool 406B, pencil tool 406C, fill tool 406D, zoom tool 406E, text tool 406F, and eraser tool 406G.

As described herein, a system process 300 may render a pointer style for a pointer element for use in a user interface element 406 when the user input (e.g., directing the system pointer element) to the computing device 120 is received within the bounded region 410 of the UI window 402 or when the user input to the computing device 120 is received at the location 408 (which intersects UI element 406). In other words, a pointer style can be applied to the pointer element by the system by two different mechanisms which may each be implemented at the same time. In an example of the first mechanism, a preliminary interaction with the UI window 402 is in pre-defined bounded areas or regions 410.

In the example illustrated in FIG. 4, when a particular tool is selected in a prior user input to the app 260, the app 260 can provide pointer style information to the system for that tool. Then, when a preliminary interaction with the UI window 402 to control the system pointer element 428 to be at the location 408B (within the large bounded area 410), the pointer style corresponding to the particular tool can be applied to the pointer element 428B. In an example of the second mechanism, when the pointer element 428 is moved to the location 408C, the preliminary interaction provides that the user input (in this case, pointer element location) intersects the UI element corresponding to the pencil tool 406C. While the pointer element is determined to intersect the UI element corresponding to pencil tool 406C, the pointer style can be changed to another pointer style, such as the pointer style depicted at pointer element 428A. In some aspects, the UI elements may not be used for pointer style definitions and only defined bounded regions may be used, for example, the smaller bounded region 410 surrounding the tools UI elements 406 may be used to define the pointer element to apply the particular pointer element style shown at pointer element 428A. In some aspects, when the pointer element 428 is within the UI window 402, but outside a predefined bounded region, like the large predefined bounded region 410, then the pointer style may be pre-selected or a default pointer style may be used. In other words, a developer may only need to specify the bounded regions of interest where the pointer style can change and everywhere else the pointer style can be defined in a default manner.

In the instant example, a brush tool 406B is selected and the preliminary interaction may provide that the user input controls the pointer element to be at the location 408B. Because this location is within the predefined bounded region 410 as part of the pointer style definitions from app 260, the system may utilize the pointer style corresponding to the brush tool 406B. Selection of another tool, for example the pencil tool 406C, may be made by moving the pointer element to the UI element corresponding to the pencil tool 406C. For example, a user's gaze and/or finger movement may manipulate a pointer element to engage in various preliminary interactions with the UI window 402 of the app 260 to reposition the pointer element. When the pointer element is at the location 408C, within the smaller bounded region 410 and/or intersecting the pencil tool 406C UI element, the pointer style may change to be a selection pointer (such as illustrated at pointer element 428A).

Further, as described herein, a system process 300 may render one or more effects for a user interface element 406 when the user input to the computing device 120 is received at the location 408 of a UI element 406 (e.g., when the user's gaze location 114 falls within the boundary of the UI element 406 or within a range of the boundary of the UI element 406, and/or when a user's hand or finger hovers over a location within the boundary of the UI element 406 or within a range of the boundary of the UI element 406, such as for a predetermined amount of time). As described herein, these effects can be out-of-process effects, pre-defined by the underlying application for the UI element 406, that are rendered without providing user information (e.g., the location of the user input) to the application.

In one or more implementations, a user input to a UI element 426, and/or another interaction with an application UI, may cause the system to apply a resize effect to the UI element 426 to change the UI element 426 from a first state to a second state, and apply a transition animation to the UI element 426, all according to the effect definitions.

FIGS. 5A and 5B illustrate an example use case including the UI window 422 of FIG. 4 and a user preliminary interaction with a UI element 426B changes the UI element 426B from the first state 426B' to a second state 426B" of the UI element 426B. As indicated in FIG. 5A, hit-testing (e.g., hit-testing 282) by the system process 300 may determine that the location 408 of the user input is a location that intersects the UI element 426B in a preliminary interaction. For example, the user input at the location 408 may be a preliminary user input, such as a gaze or a hover of a hand or input device (e.g., for more than a predetermined amount of time, such as a dwell time). In this example, the user input at the location 408 may cause the system process 300 (e.g., without providing any information about the user input or the location 408 to the application) to provide an out-of-process or remote effect (e.g., a visual effect or an audio effect) to cause the UI element 426B to resize and change from a first state 426B' to a second state 426B" according to the effect definitions of the UI element 426B.

As indicated in FIG. 5B, when the resize process is completed by animating the change from the first state 426B' to the second state 426B", the second state 426B" may include additional UI elements such as UI element 426B"-1 (e.g., a slider control), UI element 426B"-2 (e.g., a button), UI element 426B"-3 (e.g., a button). It should be appreciated that these elements are examples, and any suitable UI element type can be used, as desired. Moreover, each of these UI elements may have effects definitions provided by the app process 350 to the system process 300, and hit-testing (e.g., hit-testing 282) may be performed to apply effects to each of these UI elements.

Notably, the second state 426B" of the UI element 426 has expanded to cover the UI element of the first state 426B' and the second state 426B" of the UI element 426 has expanded to cover a portion of the UI element 426C. As such, if a confirmed user input were to occur (e.g., including a detected a pinch or click gesture, a pinch or click gesture combined with a gaze, or a gaze or hover for at least a predetermined amount of time, such as a dwell time) such that the user input would be provided to the app, for example, as coordinates, if the user input were interacting with one of the UI elements 426B"-1, 426B"-2, or 426B"-3, then the app receiving the user input would not understand that the user input is directed to the UI element 426 in the second state 426B" and the user input could be misconstrued. For example, the app could understand that a user input sent to the location of the UI element 426B"-3 was intended for the UI element 426C, because they intersect. In such a situation, in addition to the location corresponding to the user input, the system process 300 can send to the app process 350 an indication of what UI element was interacted with. The indication, for example, can be an element id of the UI element, a name of the UI element, an indication of the state information for the UI elements, and so forth. Then, the app process 350 can adjust the internal understanding of the application state to replace internally the first state 426B' with the second state 426B" and then determine based on the location of the user input that the UI element 426B"-3, for example, was interacted with.

It should also be understood that the pointer styles discussed with respect to FIG. 4 can be combined with the out-of-process resize effects discussed with respect to FIGS. 5A and 5B, and these further can be combined with the other out-of-process effects discussed herein such as glow and hover effects, and so forth.

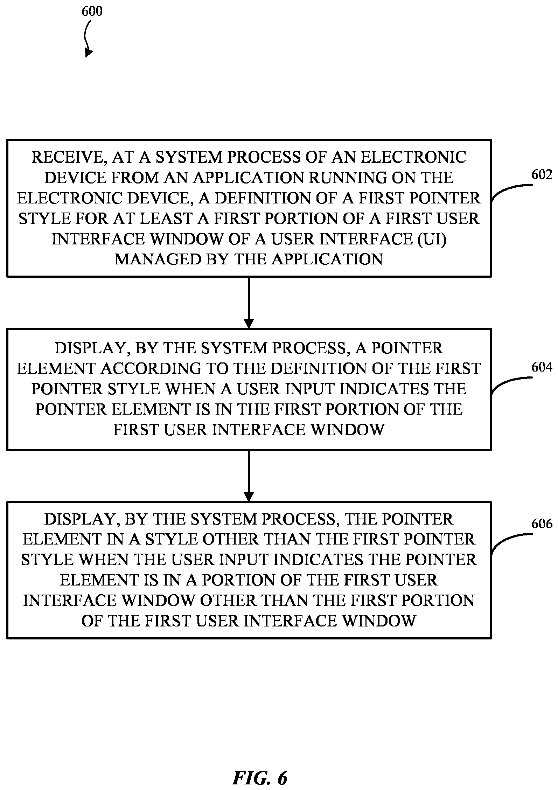

FIG. 6 illustrates an example process 600 for providing out-of-process hit-testing and applying pointer styles, in accordance with one or more implementations. For explanatory purposes, the process 600 is primarily described herein with reference to the computing device 120 of FIG. 1. However, the process 600 is not limited to the computing device 120 of FIG. 1, and one or more blocks (or operations) of the process 600 may be performed by one or more other components of other suitable devices. Further for explanatory purposes, some of the blocks of the process 600 are described herein as occurring in serial, or linearly. However, multiple blocks of the process 600 may occur in parallel. In addition, the blocks of the process 600 need not be performed in the order shown and/or one or more blocks of the process 600 need not be performed and/or can be replaced by other operations.

As shown in Fig. 6, at block 602, process 600 may include receiving, at a system process of an electronic device from an application running on the electronic device, a definition of a first pointer style for at least a first portion of a first user interface window of a user interface (UI) managed by the application. The user input may correspond to a preliminary interaction. The pointer element may be displayed by the system process without providing an indication to the application that the pointer element is in the first portion of the first user interface window.

The definition of the first pointer style may include a description of the first pointer style including one or more of a size parameter, a color parameter, an offset parameter, or a shape parameter. The definition of the first pointer style includes a location of a rendered output of the application, and displaying the pointer element according to the definition of the first pointer style comprises: redirecting the rendered output of the application to a location corresponding to the pointer element. The definition of the first pointer style may include an indication of a bounded region corresponding to the first portion of the first user interface window. The definition of the first pointer style may include an indication of a first user interface element of the first user interface window.

In some aspects, one or more definitions of one or more additional pointer styles may be received, where each pointer style indicates a portion of the UI to which the pointer style is applied.

At block 604, process 600 may also include displaying, by the system process, a pointer element according to the definition of the first pointer style when a user input indicates the pointer element is in the first portion of the first user interface window.

At block 606, process may also include displaying, by the system process, the pointer element in a style other than the first pointer style when the user input indicates the pointer element is in a portion of the first user interface window other than the first portion of the first user interface window. The style other than the first pointer style may also be provided by the application to the system process in a definition declaration.

In some aspects, the process 600 may also include receiving a preliminary user input that moves the pointer element out of the first portion of the first user interface window, and altering a pointer style of the pointer element to be the style other than the first pointer style.

In some aspects, the preliminary user input comprises at least one of a gaze input indicating engagement with the first user interface window or a finger gesture controlling the pointer element.

In some aspects, the process 600 further includes receiving, by the system process, an active input from a user to provide the active input to the application; providing the active input to the application, the active input including a location of the pointer element in the first user interface window; in response to the active input, receiving by the system process, an updated definition of the first pointer style for the first portion of the first user interface window; and displaying, by the system process, the pointer element according to the updated definition of the first pointer style when the user input indicates the pointer element is in the first portion of the first user interface window.

In some aspects, the process 600 further includes while displaying, by the system process, the pointer element according to the definition of the first pointer style, applying a resize effect to a first UI element intersecting the pointer element, the resize effect causing a display of the first UI element to change from a first state to a second state.

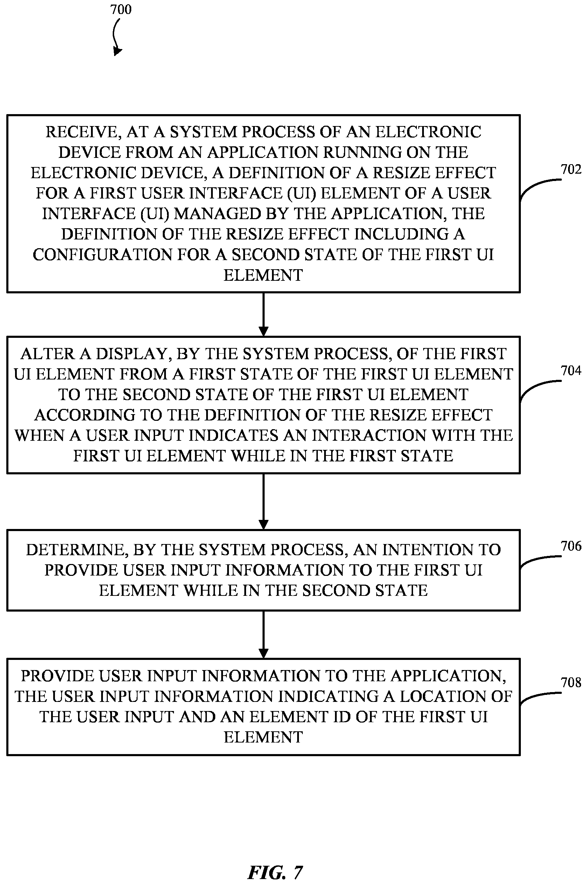

FIG. 7 illustrates an example process 700 for providing out-of-process hit-testing and resizing effects, in accordance with one or more implementations. For explanatory purposes, the process 700 is primarily described herein with reference to the computing device 120 of FIG. 1. However, the process 700 is not limited to the computing device 120 of FIG. 1, and one or more blocks (or operations) of the process 700 may be performed by one or more other components of other suitable devices. Further for explanatory purposes, some of the blocks of the process 700 are described herein as occurring in serial, or linearly. However, multiple blocks of the process 700 may occur in parallel. In addition, the blocks of the process 700 need not be performed in the order shown and/or one or more blocks of the process 700 need not be performed and/or can be replaced by other operations.

At block 702, process 700 may include receiving, at a system process of an electronic device from an application running on the electronic device, a definition of a resize effect for a first user interface (UI) element of a user interface (UI) managed by the application, the definition of the resize effect including a configuration for a second state of the first UI element. The definition of the resize effect may include a configuration for the first state of the first UI element.

At block 704, process 700 may also include altering a display, by the system process, of the first UI element from a first state of the first UI element to the second state of the first UI element according to the definition of the resize effect when a user input indicates an interaction with the first UI element while in the first state. The interaction may be a resize interaction. The display size of the second state may be larger than a display size of the first state.

At block 706, process 700 may include determining, by the system process, an intention to provide user input information to the first UI element while in the second state.

At block 708, process 700 may include providing user input information to the application, the user input information indicating a location of the user input and an element id of the first UI element. The location of the user input may be outside an area of the first state of the first UI element and within an area of the second state of the first UI element.

In some aspects, the second state of the first UI element includes one or more additional UI elements, and the process 700 may further include applying an effect to a second UI element of the one or more additional UI elements when a user input in the first UI element indicates a further indication with the second UI element, where the effect is applied according to an effect definition received from the application. The one or more additional UI elements may be unavailable when the first UI element is in the first state.

In some aspects, the first UI element may return from the second state to the first state, for example, when a user disengages from the first UI element. Process 700 may further include, for example, receiving, by the system process, while the first UI element is in the second state, a user input indicating that a location corresponding to the user input is outside an intersection with the first UI element; and altering a display, by the system process, of the first UI element from the second state to the first state. In some aspects, the process 700 may further include providing, by the system process, a pointer style for a pointer element based on the location of the user input; and updating the pointer style for the pointer element when the location of the user input changes from first redefined region to a second predefined region.

Although Fig. 7 shows example blocks of process 700, in some implementations, process 700 may include additional blocks, fewer blocks, different blocks, or differently arranged blocks than those depicted in Fig. 7. Additionally, or alternatively, two or more of the blocks of process 700 may be performed in parallel.

As described above, one aspect of the present technology is the gathering and use of data available from specific and legitimate sources for providing out-of-process hit-testing for electronic devices. The present disclosure contemplates that in some instances, this gathered data may include personal information data that uniquely identifies or can be used to identify a specific person. Such personal information data can include audio data, voice data, demographic data, location-based data, online identifiers, telephone numbers, email addresses, home addresses, encryption information, data or records relating to a user's health or level of fitness (e.g., vital signs measurements, medication information, exercise information), date of birth, or any other personal information.

The present disclosure recognizes that the use of personal information data, in the present technology, can be used to the benefit of users. For example, the personal information data can be used for providing out-of-process hit-testing for electronic devices.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the example of providing out-of-process hit-testing for electronic devices, the present technology can be configured to allow users to select to "opt in" or "opt out" of participation in the collection and/or sharing of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level or at a scale that is insufficient for facial recognition), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

FIG. 8A illustrates an example computing device 800 with which aspects of the subject technology may be implemented in accordance with one or more implementations. The computing device 800 can be, and/or can be a part of, any computing device or server for generating the features and processes described above, including but not limited to a laptop computer, a smartphone, a tablet device, a wearable device such as a goggles or glasses, and the like. The computing device 800 may include various types of computer readable media and interfaces for various other types of computer readable media. The computing device 800 includes a permanent storage device 802, a system memory 804 (and/or buffer), an input device interface 806, an output device interface 808, a bus 810, a ROM 812, one or more processing unit(s) 814, one or more network interface(s) 816, and/or subsets and variations thereof.

The bus 810 collectively represents all system, peripheral, and chipset buses that communicatively connect the numerous internal devices of the computing device 800. In one or more implementations, the bus 810 communicatively connects the one or more processing unit(s) 814 with the ROM 812, the system memory 804, and the permanent storage device 802. From these various memory units, the one or more processing unit(s) 814 retrieves instructions to execute and data to process in order to execute the processes of the subject disclosure. The one or more processing unit(s) 814 can be a single processor or a multi-core processor in different implementations.

The ROM 812 stores static data and instructions that are needed by the one or more processing unit(s) 814 and other modules of the computing device 800. The permanent storage device 802, on the other hand, may be a read-and-write memory device. The permanent storage device 802 may be a non-volatile memory unit that stores instructions and data even when the computing device 800 is off. In one or more implementations, a mass-storage device (such as a magnetic or optical disk and its corresponding disk drive) may be used as the permanent storage device 802.

In one or more implementations, a removable storage device (such as a floppy disk, flash drive, and its corresponding disk drive) may be used as the permanent storage device 802. Like the permanent storage device 802, the system memory 804 may be a read-and-write memory device. However, unlike the permanent storage device 802, the system memory 804 may be a volatile read-and-write memory, such as random-access memory. The system memory 804 may store any of the instructions and data that one or more processing unit(s) 814 may need at runtime. In one or more implementations, the processes of the subject disclosure are stored in the system memory 804, the permanent storage device 802, and/or the ROM 812. From these various memory units, the one or more processing unit(s) 814 retrieves instructions to execute and data to process in order to execute the processes of one or more implementations.

The bus 810 also connects to the input and output device interfaces 806 and 808. The input device interface 806 enables a user to communicate information and select commands to the computing device 800. Input devices that may be used with the input device interface 806 may include, for example, alphanumeric keyboards and pointing devices (also called "cursor control devices"). The output device interface 808 may enable, for example, the display of images generated by computing device 800. Output devices that may be used with the output device interface 808 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information.

One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 8A, the bus 810 also couples the computing device 800 to one or more networks and/or to one or more network nodes through the one or more network interface(s) 816. In this manner, the computing device 800 can be a part of a network of computers (such as a LAN, a wide area network ("WAN"), or an Intranet, or a network of networks, such as the Internet. Any or all components of the computing device 800 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, software modules and/or components.

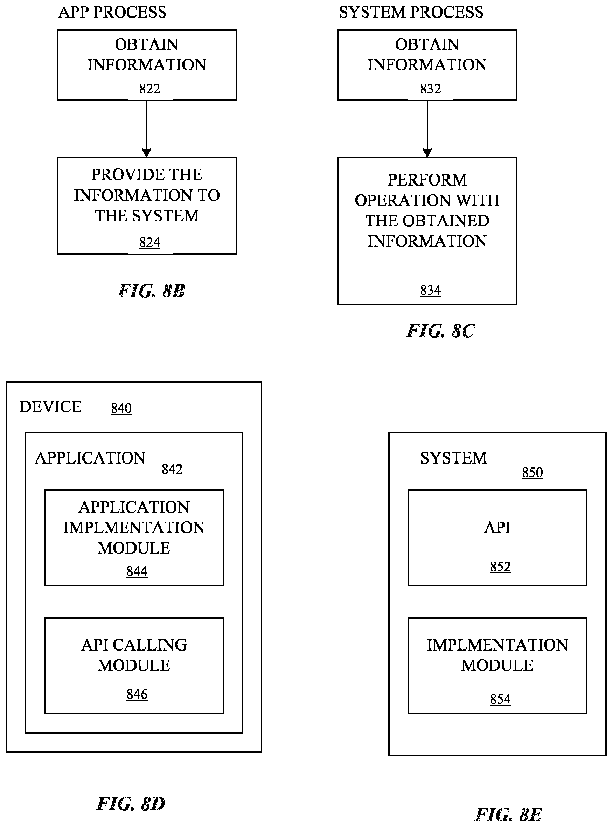

Implementations within the scope of the present disclosure include a computer-readable storage medium that encodes instructions organized as an application (e.g., application 842) that, when executed by one or more processing units, control device 840) to perform the method of FIG. 8B, the method of FIG. 8C, and/or one or more other processes and/or methods described herein.

It should be recognized that application 842 (shown in FIG. 8D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 842 is an application that is pre-installed on device 840 at purchase (e.g., a first party application). In other embodiments, application 842 is an application that is provided to device 840 via an operating system update file (e.g., a first party application or a second party application). In some embodiments, application 842 is an application that is provided via an application store. In some embodiments, the application store can be an application store that is pre-installed on device 840 at purchase (e.g., a first party application store). In some embodiments, the application store is a third-party application store (e.g., an application store that is provided by another application store, downloaded via a network, and/or read from a storage device).

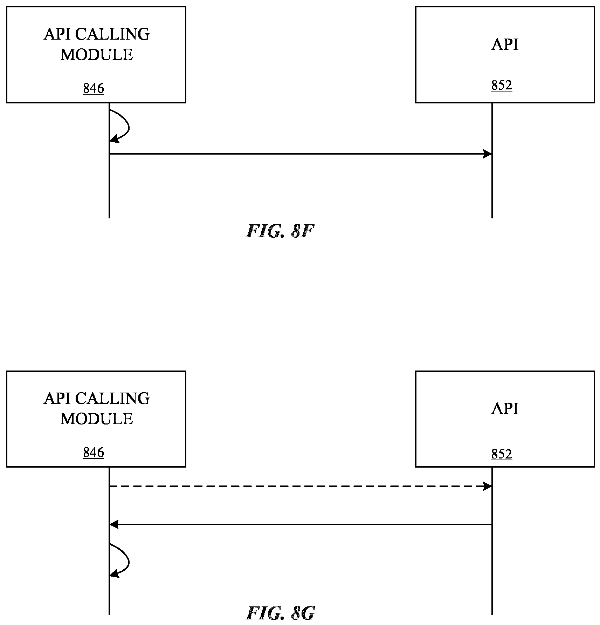

Referring to FIG. 8B and FIG 8F, application 842 obtains information (e.g., 822). In some embodiments, at 822, information is obtained from at least one hardware component of the device 840. In some embodiments, at 822, information is obtained from at least one software module (e.g., set of instructions) of the device 840. In some embodiments, at 822, information is obtained from at least one hardware component external to the device 840 (e.g., a peripheral device, an accessory device, and/or a server). In some embodiments, the information obtained at 822 includes positional information, time information, notification information, user information, environment information, electronic device state information, weather information, media information, historical information, event information, hardware information, and/or motion information. In some embodiments, in response to and/or after obtaining the information at 822, application 842 provides the information to a system (e.g., 824).

In some embodiments, the system (e.g., 850 shown in FIG. 8E) is an operating system hosted on the device 840. In some embodiments, the system (e.g., 850 shown in FIG. 8E) is an external device (e.g., a server, a peripheral device, an accessory, and/or a personal computing device) that includes an operating system.

Referring to FIG. 8C and FIG. 8G, application 842 obtains information (e.g., 832). In some embodiments, the information obtained at 832 includes positional information, time information, notification information, user information, environment information electronic device state information, weather information, media information, historical information, event information, hardware information and/or motion information. In response to and/or after obtaining the information at 832, application 842 performs an operation with the information (e.g., 834). In some embodiments, the operation performed at 834 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 850 based on the information.

In some embodiments, one or more steps of the method of FIG. 8B and/or the method of FIG. 8C is performed in response to a trigger. In some embodiments, the trigger includes detection of an event, a notification received from system 850, a user input, and/or a response to a call to an API provided by system 850.

In some embodiments, the instructions of application 842, when executed, control device 840 to perform the method of FIG. 8B and/or the method of FIG. 8C by calling an application programming interface (API) (e.g., API 852) provided by system 850. In some embodiments, application 842 performs at least a portion of the method of FIG. 8B and/or the method of FIG. 8C without calling API 852.

In some embodiments, one or more steps of the method of FIG. 8B and/or the method of FIG. 8C includes calling an API (e.g., API 852) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 8D, device 840 is illustrated. In some embodiments, device 840 is a personal computing device, a smart phone, a smart watch, a fitness tracker, a head mounted display (HMD) device, a media device, a communal device, a speaker, a television, and/or a tablet. Device 840 includes application 842 and an operating system (not shown) (e.g., system 850 shown in FIG. 8E). Application 842 includes application implementation instructions 844 and API-calling instructions 846. System 850 includes API 852 and implementation instructions 854. It should be recognized that device 840, application 842, and/or system 850 can include more, fewer, and/or different components than illustrated in FIG. 8D and 8E.

In some embodiments, application implementation instructions 844 is a software module that includes a set of one or more computer-readable instructions. In some embodiments, the set of one or more instructions of instructions 844 correspond to one or more operations performed by application 842. For example, when application 842 is a messaging application, application implementation instructions 844 can include operations to receive and send messages. In some embodiments, application implementation instructions 844 communicates with API calling instructions to communicate with system 850 via API 852 (shown in FIG. 8E).

In some embodiments, API-calling instructions 846 is a software module that includes a set of one or more computer-executable instructions.

In some embodiments, implementation instructions 854 is a software module that includes a set of one or more computer-executable instructions.

In some embodiments, API 852 is a software module that includes a set of one or more computer-executable instructions. In some embodiments, API 852 provides an interface that allows a different set of instructions (e.g., API-calling instructions 846) to access and/or use one or more functions, methods, procedures, data structures, classes, and/or other services provided by implementation instructions 854 of system 850. For example, API-calling instructions 846 can access a feature of implementation instructions 854 through one or more API calls or invocations (e.g., embodied by a function or a method call) exposed by API 852 and can pass data and/or control information using one or more parameters via the API calls or invocations. In some embodiments, API 852 allows application 842 to use a service provided by a Software Development Kit (SDK) library. In some embodiments, application 842 incorporates a call to a function or method provided by the SDK library and provided by API 852 or uses data types or objects defined in the SDK library and provided by API 852. In some embodiments, API-calling instructions 846 makes an API call via API 852 to access and use a feature of implementation instructions 854 that is specified by API 852. In such embodiments, implementation instructions 854 can return a value via API 852 to API-calling instructions 846 in response to the API call. The value can report to application 842 the capabilities or state of a hardware component of device 840, including those related to aspects such as input capabilities and state, output capabilities and state, processing capability, power state, storage capacity and state, and/or communications capability. In some embodiments, API 852 is implemented in part by firmware, microcode, or other low level logic that executes in part on the hardware component.

In some embodiments, API 852 allows a developer of API-calling instructions 846 (which can be a third-party developer) to leverage a feature provided by implementation instructions 854. In such embodiments, there can be one or more set of API-calling instructions (e.g., including API-calling instructions 846) that communicate with implementation instructions 854. In some embodiments, API 852 allows multiple sets of API-calling instructions written in different programming languages to communicate with implementation instructions 854 (e.g., API 852 can include features for translating calls and returns between implementation instructions 854 and API-calling instructions 846) while API 852 is implemented in terms of a specific programming language. In some embodiments, API-calling instructions 846 calls APIs from different providers such as a set of APIs from an OS provider, another set of APIs from a plug-in provider, and/or another set of APIs from another provider (e.g., the provider of a software library) or creator of the another set of APIs.

Examples of API 852 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments the sensor API is an API for accessing data associated with a sensor of device 840. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, implementation instructions 854 is a system (e.g., operating system, server system) software module (e.g., a collection of computer-readable instructions) that is constructed to perform an operation in response to receiving an API call via API 852. In some embodiments, implementation instructions 854 is constructed to provide an API response (via API 852) as a result of processing an API call. By way of example, implementation instructions 854 and API-calling instructions 846 can each be any one of an operating system, a library, a device driver, an API, an application program, or other module. It should be understood that implementation instructions 854 and API-calling instructions 846 can be the same or different type of software module from each other. In some embodiments, implementation instructions 854 is embodied at least in part in firmware, microcode, or other hardware logic.

In some embodiments, implementation instructions 854 returns a value through API 852 in response to an API call from API-calling instructions 846. While API 852 defines the syntax and result of an API call (e.g., how to invoke the API call and what the API call does), API 852 might not reveal how implementation instructions 854 accomplishes the function specified by the API call. Various API calls are transferred via the one or more application programming interfaces between API-calling instructions 846 and implementation instructions 854. Transferring the API calls can include issuing, initiating, invoking, calling, receiving, returning, and/or responding to the function calls or messages. In other words, transferring can describe actions by either of API-calling instructions 846 or implementation instructions 854. In some embodiments, a function call or other invocation of API 852 sends and/or receives one or more parameters through a parameter list or other structure.

In some embodiments, implementation instructions 854 provides more than one API, each providing a different view of or with different aspects of functionality implemented by implementation instructions 854. For example, one API of implementation instructions 854 can provide a first set of functions and can be exposed to third party developers, and another API of implementation instructions 854 can be hidden (e.g., not exposed) and provide a subset of the first set of functions and also provide another set of functions, such as testing or debugging functions which are not in the first set of functions. In some embodiments, implementation instructions 854 calls one or more other components via an underlying API and thus be both a set of API calling instructions and a set of implementation instructions. It should be recognized that implementation instructions 854 can include additional functions, methods, classes, data structures, and/or other features that are not specified through API 852 and are not available to API-calling instructions 846. It should also be recognized that API-calling instructions 846 can be on the same system as implementation instructions 854 or can be located remotely and access implementation instructions 854 using API 852 over a network. In some embodiments, implementation instructions 854, API 852, and/or API-calling instructions 846 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

In some embodiments, the process 600 and/or 700 (FIG. 6, FIG. 7) is performed at a first computer system (as described herein) via a system process (e.g., an operating system process, a server system process) that is different from one or more applications executing and/or installed on the first computer system.

In some embodiments, the process 600 and/or 700 (FIG. 6, FIG. 7) is performed at a first computer system (as described herein) by an application (e.g., a trusted application, such as one provided or verified by the manufacturer of the system) that is different from a system process. In some embodiments, the instructions of the application, when executed, control the first computer system to perform process 600 and/or 700 (FIG. 6, FIG. 7) by calling an application programming interface (API) provided by the system process. In some embodiments, the application performs at least a portion of process 600 and/or 700 without calling the API.

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first party application). In some embodiments, the application is an application that is provided to the first computer system via an operating system update file (e.g., a first party application). In some embodiments, the application is an application that is provided via an application store. In some embodiments, the application store is pre-installed on the first computer system at purchase (e.g., a first party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform the process 600 and/or 700 (FIG. 6, FIG. 7) by calling an application programming interface (API) provided by the system process using one or more parameters.

In some embodiments, at least one API is a software module (e.g., a collection of computer-readable instructions) that provides an interface that allows a different set of instructions (e.g., API calling instructions) to access and use one or more functions, methods, procedures, data structures, classes, and/or other services provided by a set of implementation instructions of the system process. The API can define one or more parameters that are passed between the API calling instructions and the implementation instructions.

An API that can be called, for example, can correspond to an API provided by the system process to receive the pointer-style definitions and UI element effect definitions from the application. The application, for example, can call such an API to provide the definition declarations to the system. The system process, for example, can call such an API to retrieve the definition declarations.

As described above, in some embodiments, the application controls the first computer system to perform process 600 and/or 700 (FIG. 6, FIG. 7) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, the API 852 defines a first API call API-calling instructions 846, wherein the definition for the first API call specifies the relevant call parameters according to those variables and elements discussed above.

In some embodiments, the API 852 defines a first API call response that can be provided to the application by API-calling instructions 846, wherein the first API call response provides responsive communications and outputs corresponding to the processes discussed above.

In some embodiments, the set of implementation instructions is a system software module (e.g., a collection of computer-readable instructions) that is constructed to perform an operation in response to receiving an API call via the API. In some embodiments, the set of implementation instructions is constructed to provide an API response (via the API) as a result of processing an API call. In some embodiments, the set of implementation instructions is included in the device (e.g., 840) that runs the application. In some embodiments, the set of implementation instructions is included in an electronic device that is separate from the device that runs the application.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components (e.g., computer program products) and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

### Clauses:

1. A method comprising:
   receiving, at a system process of an electronic device from an application running on the electronic device, a definition of a first pointer style for at least a first portion of a first user interface window of a user interface (UI) managed by the application;
   displaying, by the system process, a pointer element according to the definition of the first pointer style when a user input indicates the pointer element is in the first portion of the first user interface window; and
   displaying, by the system process, the pointer element in a style other than the first pointer style when the user input indicates the pointer element is in a portion of the first user interface window other than the first portion of the first user interface window.
2. The method of clause 1, wherein the user input corresponds to a preliminary interaction.
3. The method of clause 1, wherein the pointer element is displayed by the system process without providing an indication to the application that the pointer element is in the first portion of the first user interface window.
4. The method of clause 1, wherein the style other than the first pointer style is provided by the application to the system process in a definition declaration.
5. The method of clause 1, further comprising:
   receiving, by the system process, a preliminary user input that moves the pointer element out of the first portion of the first user interface window; and
   altering a pointer style of the pointer element to be the style other than the first pointer style.
6. The method of clause 5, wherein the preliminary user input comprises at least one of a gaze input indicating engagement with the first user interface window or a finger gesture controlling the pointer element.
7. The method of clause 1, further comprising:
   receiving, by the system process, an active input from a user to provide the active input to the application;
   providing the active input to the application, the active input including a location of the pointer element in the first user interface window;
   in response to the active input, receiving by the system process, an updated definition of the first pointer style for the first portion of the first user interface window; and
   displaying, by the system process, the pointer element according to the updated definition of the first pointer style when the user input indicates the pointer element is in the first portion of the first user interface window.
8. The method of clause 1, wherein the definition of the first pointer style includes a description of the first pointer style including one or more of a size parameter, a color parameter, an offset parameter, or a shape parameter, wherein the definition of the first pointer style includes an indication of a bounded region corresponding to the first portion of the first user interface window, wherein the method further comprises:
   receiving a definition of one or more additional pointer styles, wherein each pointer style indicates a portion of the UI to which the pointer style is applied.
9. The method of clause 1, wherein the definition of the first pointer style includes a location of a rendered output of the application, and wherein the displaying the pointer element according to the definition of the first pointer style comprises:
   redirecting the rendered output of the application to a location corresponding to the pointer element.
10. The method of clause 1, further comprising:
   while displaying, by the system process, the pointer element according to the definition of the first pointer style, applying a resize effect to a first UI element intersecting the pointer element, the resize effect causing a display of the first UI element to change from a first state to a second state.
11. A device comprising:
   one or more processors; and
   a computer-readable medium, wherein the one or more processors are configured to perform operations comprising:
      receiving, at a system process of the device from an application running on the device, a definition of a resize effect for a first user interface (UI) element of a user interface (UI) managed by the application, the definition of the resize effect including a configuration for a second state of the first UI element;
      altering a display, by the system process, of the first UI element from a first state of the first UI element to the second state of the first UI element according to the definition of the resize effect when a user input indicates an interaction with the first UI element while in the first state;
      determining, by the system process, an intention to provide user input information to the first UI element while in the second state; and
      providing user input information to the application, the user input information indicating a location of the user input and an element id of the first UI element.
12. The device of clause 11, wherein the interaction is a resize interaction.
13. The device of clause 11, wherein the location of the user input is outside an area of the first state of the first UI element and within an area of the second state of the first UI element.
14. The device of clause 11, wherein a display size of the second state is larger than a display size of the first state.
15. The device of clause 11, wherein the second state of the first UI element includes one or more additional UI elements.
16. The device of clause 15, wherein the operations further comprise:
   applying an effect to a second UI element of the one or more additional UI elements when a user input in the first UI element indicates a further indication with the second UI element, wherein the effect is applied according to an effect definition received from the application.
17. The device of clause 15, wherein the one or more additional UI elements are unavailable when the first UI element is in the first state.
18. The device of clause 11, wherein the operations further comprise:
   receiving, by the system process, while the first UI element is in the second state, a user input indicating that a location corresponding to the user input is outside an intersection with the first UI element; and
   altering a display, by the system process, of the first UI element from the second state to the first state.
19. The device of clause 11, wherein the operations further comprise:
   providing, by the system process, a pointer style for a pointer element based on the location of the user input; and
   updating the pointer style for the pointer element when the location of the user input changes from first redefined region to a second predefined region.
20. A non-transitory computer-readable medium storing instructions thereon, which when executed by one or more processors, cause the one or more processors to perform operations comprising:
   receiving, at a system process of an electronic device from an application running on the electronic device, a definition of a first pointer style for at least a first portion of a first user interface window of a user interface (UI) managed by the application;
   displaying, by the system process, a pointer element according to the definition of the first pointer style when a user input indicates the pointer element is in the first portion of the first user interface window; and
   displaying, by the system process, the pointer element in a style other than the first pointer style when the user input indicates the pointer element is in a portion of the first user interface window other than the first portion of the first user interface window.

## Claims

1. A method comprising:
receiving, at a system process of an electronic device from an application running on the electronic device, a definition of a first pointer style for at least a first portion of a first user interface window of a user interface (UI) managed by the application;
displaying, by the system process, a pointer element according to the definition of the first pointer style when a user input indicates the pointer element is in the first portion of the first user interface window; and
displaying, by the system process, the pointer element in a style other than the first pointer style when the user input indicates the pointer element is in a portion of the first user interface window other than the first portion of the first user interface window.

2. The method of claim 1, wherein the user input corresponds to a preliminary interaction.

3. The method of any of claims 1-2, wherein the pointer element is displayed by the system process without providing an indication to the application that the pointer element is in the first portion of the first user interface window.

4. The method of any of claims 1-3, wherein the style other than the first pointer style is provided by the application to the system process in a definition declaration.

5. The method of any of claims 1-4, further comprising:
receiving, by the system process, a preliminary user input that moves the pointer element out of the first portion of the first user interface window; and
altering a pointer style of the pointer element to be the style other than the first pointer style.

6. The method of any of claims 1-5, wherein the preliminary user input comprises at least one of a gaze input indicating engagement with the first user interface window or a finger gesture controlling the pointer element.

7. The method of any of claims 1-6, further comprising:
receiving, by the system process, an active input from a user to provide the active input to the application;
providing the active input to the application, the active input including a location of the pointer element in the first user interface window;
in response to the active input, receiving by the system process, an updated definition of the first pointer style for the first portion of the first user interface window; and
displaying, by the system process, the pointer element according to the updated definition of the first pointer style when the user input indicates the pointer element is in the first portion of the first user interface window.

8. The method of any of claims 1-7, wherein the definition of the first pointer style includes a description of the first pointer style including one or more of a size parameter, a color parameter, an offset parameter, or a shape parameter, wherein the definition of the first pointer style includes an indication of a bounded region corresponding to the first portion of the first user interface window, wherein the method further comprises:
receiving a definition of one or more additional pointer styles, wherein each pointer style indicates a portion of the UI to which the pointer style is applied.

9. The method of any of claims 1-7, wherein the definition of the first pointer style includes a location of a rendered output of the application, and wherein the displaying the pointer element according to the definition of the first pointer style comprises:
redirecting the rendered output of the application to a location corresponding to the pointer element.

10. The method of any of claims 1-8, further comprising:
receiving, at the system process from the application running on the electronic device, a definition of a resize effect for a first user interface (UI) element of the user interface (UI) managed by the application, the definition of the resize effect including a configuration for a second state of the first UI element;
altering a display, by the system process, of the first UI element from a first state of the first UI element to the second state of the first UI element according to the definition of the resize effect when a second user input indicates an interaction with the first UI element while in the first state;
determining, by the system process, an intention to provide user input information to the first UI element while in the second state; and
providing user input information to the application, the user input information indicating a location of the second user input and an element id of the first UI element.

11. The method of claim 10, wherein the interaction is a resize interaction.

12. The method of any of claims 10-11, wherein the location of the second user input is outside an area of the first state of the first UI element and within an area of the second state of the first UI element.

13. The method of any of claims 10-12, wherein the second state of the first UI element includes one or more additional UI elements, wherein the method further comprises:
applying an effect to a second UI element of the one or more additional UI elements when a third user input in the first UI element indicates a further indication with the second UI element, wherein the effect is applied according to an effect definition received from the application.

14. The method of any of claims 10-13, wherein the one or more additional UI elements are unavailable when the first UI element is in the first state.

15. A non-transitory computer-readable medium storing instructions thereon, which when executed by one or more processors, cause the one or more processors to perform a method comprising any of claims 1-14.
